(19) Europäisches Patentamt
European Patent Office
Office européen des brevets

(11) **EP 2 458 292 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(51) Int Cl.:
*F24D 19/10* *(2006.01)* *F24H 9/20* *(2006.01)*
*F24H 8/00* *(2006.01)* *F23N 5/00* *(2006.01)*

(21) Anmeldenummer: **11009133.7**

(22) Anmeldetag: **17.11.2011**

(54) **Wirkungsgradoptimierter Betrieb einer Brennwertheizung**

Efficiency factor optimised operation of a calorific value heater

Fonctionnement à rendement optimisé d'un chauffage à condensation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2010 DE 102010052516**
**27.12.2010 AT 21472010**

(43) Veröffentlichungstag der Anmeldung:
**30.05.2012 Patentblatt 2012/22**

(73) Patentinhaber: **Vaillant GmbH**
**42859 Remscheid (DE)**

(72) Erfinder: **Wriske, Jochen**
**42857 Remscheid (DE)**

(74) Vertreter: **Hocker, Thomas**
**Vaillant GmbH**
**Berghauser Strasse 40**
**42859 Remscheid (DE)**

(56) Entgegenhaltungen:
**WO-A1-2007/046792 WO-A1-2010/113660**
**US-A- 4 971 136 US-A1- 2008 023 564**

## Beschreibung

Die Erfindung betrifft den Betrieb einer Brennwertheizung mit möglichst geringem Primärenergieeinsatz.

Aus der Patentanmeldung WO 2007/046792 A1 ist es bekannt, bei einem Heizsystem mit Wärmepumpe und Gas-Heizgerät, bei dem zwischen den beiden Wärmequellen abhängig vom Strompreis und Gaspreis umgeschaltet wird.

Die Patentanmeldung US 2008/0023564 A1 offenbart ein Verfahren zur Steigerung der Effizienz eines hybriden Heizsystems mit mehreren Heizgeräten.

In der Patentanmeldung WO 2010/113660 A1 wird ein Steuergerät zum Ermitteln der optimalen Wassertemperatur bei einem Heizgerät beschrieben.

Das Patent US 4,971,136 offenbart ein lernendes System zum Betreiben eines Systems mit Gasbrenner und Wärmepumpe.

Unter der Belastung B eines Heizgerätes wird der Einsatz von Primärenergie verstanden; bei einem brenngasbetriebenen Heizgerät ist darunter der Brennstoffeinsatz zu verstehen.

$$B = H_{u,Brenngas} \cdot \dot{V}_{Brenngas}$$

Demgegenüber versteht man unter der thermischen Heizleistung P eines Heizgerätes die Wärme, welche das Gerät - in der Regel in Form von warmem Wasser - zur Verfügung stellt.

$$P = \rho_{Wasser} \cdot c_{p,Wasser} \cdot \dot{V}_{Wasser} \cdot (T_{Vorlauf} - T_{Rücklauf})$$

Der Wirkungsgrad des Heizgerätes wird durch das Verhältnis der Heizleistung zur Belastung bestimmt.

$$\eta = P/B$$

Gemäß dem Stand der Technik wird die Leistung von Brennwertheizungen bei geringer Wärmeanforderung sehr weit heruntergefahren und dabei ein Takten des Gerätes vermieden. Unter Leistungsmodulation wird die Veränderung der Heizleistung verstanden. Ist der Bereich von Minimalleistung zur Maximalleistung groß, so spricht man von einer hohen Modulation.

Bei Teillast eines Heizgerätes sinkt die Normvorgabe für die Heizwassertemperatur. Da gleichzeitig die Wärmetauscherfläche konstant bleibt, steigt in der Regel der Wirkungsgrad mit sinkender Belastung.

Hierbei bleibt in der Regel der Einsatz elektrischer Hilfsenergie für Gebläse, Pumpen, Regelungen etc. unberücksichtigt.

Während der elektrische Energieverbrauch der Regelung weitestgehend unabhängig von der Heizlast ist, ist dies bei der elektrischen Leistungsaufnahme des Gebläses und der Umwälzpumpe völlig anders. Diese ist maßgeblich vom jeweiligen Volumenstrom und dem hydraulischen beziehungsweise pneumatischen Widerstand des Systems abhängig und kann auch nicht pauschal vorgegeben werden. Der pneumatische Widerstand ist maßgelblich von der Länge und dem Durchmesser der Frisch- und Abgasleitung abhängig. Der hydraulische Widerstand ist maßgelblich von der Länge und dem Durchmesser der Heizwasserleitungen sowie deren Steighöhe abhängig und verhält sich quadratisch zum Massenstrom des zirkulierenden Heizungswassers.

Somit fällt bei geringen Belastungen der Gesamtwirkungsgrad, obwohl der thermische Wirkungsgrad steigt.

Aufgabe der Erfindung ist die Reduzierung des Primärenergieeinsatzes (in der Regel Brenngas plus Elektrizität) durch Berücksichtigung des Verbrauchs zusätzlicher Energieverbraucher wie beispielsweise das Heizungsgebläse und die Umwälzpumpe.

Diese Aufgabe wird gelöst durch die Ermittlung der modulationsabhängigen Gesamtleistungsaufnahme des Gerätes, die zur Übergabe einer definierten Wärmemenge in die Zentralheizungsanlage benötigt wird, in dem die energiebezogenen Momentanwerte der wesentlichen Gerätekomponenten gemessen und primärenergetisch zusammengefasst werden.

Dadurch ist die Selbstadaption des Systems, bestehend aus Gerät und Anlagentechnik, auf den effizientesten Betriebspunkt, möglich.

Die Effizienz einer Brennwertheizung wird üblicherweise durch den an das Heizungswasser übergebenen Nutzwärmestrom, bezogen auf den Aufwand, also den erforderlichen Brennstoffmengenstrom, beschrieben. Für eine Gesamtbilanz muss die erforderliche Hilfsenergie zum Fördern der beteiligten Medien (Luft bzw. Abgas, Heizungswasser) und zur Steuerung des Systems dem Aufwand zugeschlagen werden. Da diese Hilfsenergien in der Regel durch elektrischen Strom bereitgestellt werden, sind diese bei einer primärenergetisch oder Betriebskosten- orientierten Betrachtung höher zu bewerten als der Brennstoffmengenstrom, da der Primärenergiefaktor und die Energiekosten für Strom höher sind als für Gas oder Öl.

Der tatsächliche Hilfsenergieaufwand eines Heizgerätes zur Übergabe eines definierten Nutzwärmestromes in das Heizungsnetz hängt im Wesentlichen von dem nachgeschalteten hydraulischen Heiznetz und dem angeschlossenen Luft-Abgassystem ab, da unterschiedliche Druckverluste der beteiligten Rohrgeometrien zu verschiedenen Arbeitspunkten auf den Förderkennlinien der beteiligten Fördereinrichtungen (Pumpe, Lüfter) führen. Mit diesen verschiedenen Arbeitspunkten ergibt sich somit auch eine unterschiedliche Effizienz der Brennwertheizung, d.h. ein werksseitig als effizient bewerteter Betriebspunkt (definiert durch eine Pumpen- und Lüfterdrehzahl) führt bei Betrieb an einem realen hydraulischen Heiznetz und angeschlossenen Luft-Abgassystem zu einer nicht-optimalen Geräteeffizienz. Da das Heizgerät üblicherweise so konfiguriert ist, dass dieser Betriebspunkt bevorzugt anzufahren ist (d.h. auch in normseitig definierten Tests eine optimale Effizienz aufweist), ergibt sich bei der realen Anlage häufig eine nicht-optimale Geräteeffizienz, d.h. durch Einstellen besser geeigneter Pumpen- oder Lüfterdrehzahlen wäre ein effizienterer Gerätebetrieb möglich. Insbesondere im Bereich hin zu kleiner Geräteleistung durchläuft die Geräteffizienz ein Maximum, um danach wieder an Effizienz einzubüßen.

Gemäß dem Stand der Technik stehen heizgeräteseitig keine Sensoren zur Ermittlung der aktuellen Hilfsenergieaufwände zur Verfügung oder die nutzbaren Sensorsignale werden nicht im Sinne einer Bewertung oder Optimierung der Gesamteffizienz weiterverarbeitet.

Das erfindungsgemäße Verfahren zur näherungsweisen Bestimmung der Effizienz eines Heizgerätes wird im Folgenden anhand eines Ausführungsbeispiels beschrieben.

Das erfindungsgemäße Verfahren zum Ermitteln einer wirkungsgradoptimierten Betriebsart eines Heizgeräts umfasst folgende Verfahrensschritte:

Zunächst wird belastungsabhängig die thermische Leistung des Gerätes bestimmt. Dies kann experimentell ermittelt werden, indem das Gerät in einem Bereich von Minimallast zu Maximallast betreiben wird und hierbei die Leistung mittels Sensoren ermittelt wird. Dies kann jedoch auch im Speicher der Regelung aus Laborwerten hinterlegt sein, wobei in diesem Fall beispielsweise auf die Messungen im Rahmen der Zulassung zurückgegriffen werden kann. Weiterhin kann erfindungsgemäß auch auf einen rein rechnerischen Wert zurückgegriffen werden. So kann näherungsweise die Leistung aus der Lüfterdrehzahl n abgeleitet werden ($P = \alpha\,n$, $\alpha$: Proportionalitätsfaktor). Es auch der Zusammenhang zwischen Leistung $P$ und brennstoffseitigem Aufwand $\eta \bullet P$ als Kennlinie im Gerät abgelegt werden. Im einfachsten Fall, wird der thermische Wirkungsgrad als konstant angenommen.

Dann wird experimentell die leistungs- oder belastungsabhängige elektrische Leistungsaufnahme des Heizgerätes ermittelt. Hierzu gehört die Hilfsenergie des Gebläses, wobei die momentane Leistungsaufnahme des Gebläses mittels eines Sensors direkt oder indirekt gemessen wird, oder näherungsweise aus der Lüfterdrehzahl n und dem am Lüfter anstehenden Leistungssignal (z.B. Pulsweite) mittels eines zweidimensionalen Datenfelds ausgelesen wird. Ferner beinhaltet die elektrische Leistungsaufnahme des Heizgerätes die Hilfsenergie der Pumpe, wobei die momentane Leistungsaufnahme der Pumpe mittels eines Sensors direkt oder indirekt gemessen wird, oder näherungsweise aus der Pumpendrehzahl und dem aktuellen Volumenstrom mittels eines zweidimensionalen Datenfelds ermittelt wird.

Aus der Verhältnissetzung der elektrischen Leistungsaufnahme $P_{el}$ und der Belastung B zur Geräteleistung P ergibt sich der belastungs- oder thermisch leistungsabhängige Gesamtwirkungsgrad. Hierbei können die elektrische Leistungsaufnahme und die Belastung unterschiedlich gewichtet werden, um ökologischen und / oder ökonomischen Aspekten gerecht zu werden. So kostet eine Kilowattstunde elektrische Energie mehr als eine Kilowattstunde Erdgas. Auch ist die Herstellung einer Kilowattstunde elektrische Energie je nach Art der Stromproduktion mit einer gewissen Menge an Abgasen verbunden.

Ist nach oben genannten Aspekten über den Modulationsbereich eine Belastung bestimmt, bei deren Unterschreitung der Gesamtwirkungsgrad wieder ansteigt, so kann der Modulationsbereich in dieser Region nach unten begrenzt werden. Hierbei kann noch berücksichtigt werden, dass bei einer Begrenzung des Modulationsbereichs ein Takten notwendig werden kann, so dass es zu einem häufigeren Gerätestart kommen kann. Bei jedem Start eines Heizgerätesbrenners laufen für eine vorgegebene Zeit die Umwälzpumpe und das Gebläse vor, was mit elektrischem Energieverbrauch einhergeht. Zudem ist ein Start eines Heizgerätebrenners mit temporär erhöhten Emissionen an Kohlenwasserstoff und Kohlenmonoxid verbunden. Auch diese Aspekte können bei der unteren Modulationsgrenze berücksichtigt werden.

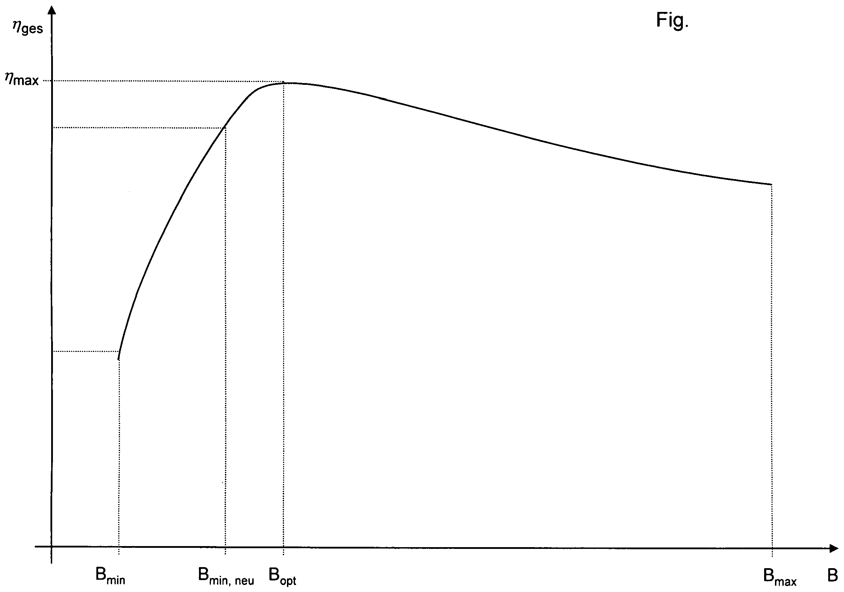

Die Figur zeigt den Gesamtwirkungsgrad $\eta_{ges}$ eines Heizgerätes über der Belastung B in einem Bereich zwischen der technisch möglichen Mindestbelastung $B_{min}$ und der Maximalbelastung $B_{max}$. Bei der Belastung $B_{opt}$ verfügt das Heizgerät über den höchsten Wirkungsgrad $\eta_{max}$. Ausgehend von dieser optimalen Belastung $B_{opt}$ wird der Modulationsbereich reduziert. Die neue, minimale Belastung $B_{min,neu}$ kann dabei der Belastung $B_{opt}$ entsprechen oder rechnerisch bestimmt werden, beispielsweise in der Form

$$B_{\min,neu} = B_{opt} - (B_{opt} - B_{\min}) / 4$$

oder in der Art, dass $B_{\min,neu}$ der Belastung entspricht, bei der der Wirkungsgrad $\eta_{ges}$ um einen bestimmten Grad, zum Beispiel 1 % das Maximum unterschritten hat.

In der Figur könnte der Wirkungsgrad auch in Abhängigkeit von der thermischen Leistung oder der Gebläsedrehzahl (als Stellgröße) dargestellt sein. Der Modulationsbereich wird in diesen Fällen durch die Vorgabe einer thermischen Leistung oder der Gebläsedrehzahl vorgegeben. Auch andere, äquivalente Systemgrößen können erfindungsgemäß Verwendung finden.

## Patentansprüche

1. Verfahren zum Ermitteln einer wirkungsgradoptimierten Betriebsart eines Heizgeräts, umfassend die Verfahrensschritte
experimentelle Ermittlung der belastungsabhängigen thermischen Leistungen oder des thermischen Wirkungsgrades, wobei die Belastung eines Heizgerätes der Einsatz von Primärenergie im Heizgerät ist, Übernahme der- oder desselben aus einer Vorgabe oder rechnerische Ermittlung,
experimentelle Ermittlung der leistungs- oder belastungsabhängigen elektrischen Leistungsaufnahme für Hilfsenergie zum Fördern der beteiligten Medien Luft bzw. Abgas und Heizungswasser sowie zur Steuerung des Systems,
Ermittlung eines belastungs- oder thermisch leistungsabhängigen Gesamtwirkungsgrades unter Verhältnissetzung der elektrischen Leistungsaufnahme und der Belastung zur Geräteleistung.

2. Verfahren zum Ermitteln einer wirkungsgradoptimierten Betriebsart eines Heizgeräts nach Anspruch 1, **dadurch gekennzeichnet, dass** bei der Ermittlung des belastungs- oder thermisch leistungsabhängigen Gesamtwirkungsgrades die elektrische Leistungsaufnahme und die Belastung unterschiedlich gewichtet werden.

3. Verfahren zum Ermitteln einer wirkungsgradoptimierten Betriebsart eines Heizgeräts nach Anspruch 1 oder 2, **dadurch gekennzeichnet, dass** der Modulationsbereich des Heizgeräts in Abhängigkeit des Optimums des Gesamtwirkungsgrades eingestellt wird.

## Claims

1. Method for determining an efficiency-optimised operating mode of a heating device, comprising the method steps
experimental determination of the stress-dependent thermal power or thermal efficiency, whereby the load of a heating device is the use of primary energy,
acquisition of the latter from a specification or a mathematical calculation, experimental determination of the power or load-dependent electrical power consumption of auxiliary energy for conveying the media involved, air or exhaust gas and heating water, and for controlling the system,
determination of a total efficiency, which is dependent on the load or thermal power, with a ratio of the electrical power consumption and load to the device's performance.

2. Method for determining an efficiency-optimised operating mode for a heating device according to Claim 1, **characterised in that,** when determining the overall efficiency, which is dependent on the load or thermal power, the electrical power consumption and the load are weighted differently.

3. Method for determining an efficiency-optimised operating mode for a heating device according to Claim 1 or 2, **characterised in that** the modulation range of the heating device is set as a function of the optimum overall efficiency.

## Revendications

1. Procédé de détermination d'un type de fonctionnement à rendement optimisé d'un appareil chauffant, comprenant les étapes de procédé
la détermination expérimentale des puissances thermiques dépendant de la charge ou du rendement thermique, dans lequel la charge d'un appareil chauffant est l'insertion d'énergie primaire dans l'appareil chauffant,

la reprise de celles-ci ou de celui-ci à partir d'une prescription ou détermination par calcul, détermination expérimentale de la puissance absorbée électrique dépendant de la puissance ou de la charge pour de l'énergie auxiliaire pour le transport des milieux concernés air ou gaz d'échappement et eau de chauffage ainsi que pour la commande du système,

la détermination d'un rendement total dépendant de la puissance thermiquement ou de la charge sous mise en rapport de la puissance absorbée électrique et de la charge pour la puissance de l'appareil.

2. Procédé de détermination d'un type de fonctionnement à rendement optimisé d'un appareil chauffant selon la revendication 1, **caractérisé en ce que** lors de la détermination du rendement entier dépendant de la puissance thermiquement ou de la charge la puissance absorbée électrique et la charge sont pondérées différemment.

3. Procédé de détermination d'un type de fonctionnement à rendement optimisé d'un appareil chauffant selon la revendication 1 ou 2, **caractérisé en ce que** la zone de modulation de l'appareil chauffant est réglée en fonction de l'optimum du rendement entier.

Fig.

$\eta_{ges}$

$\eta_{max}$

$B_{min}$    $B_{min,\,neu}$    $B_{opt}$    $B_{max}$    $B$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007046792 A1
- US 20080023564 A1
- WO 2010113660 A1
- US 4971136 A